# EUROPÄISCHE PATENTSCHRIFT

(11) **EP 1 693 332 B1**
(45) Veröffentlichungstag und Bekanntmachung des Hinweises auf die Patenterteilung: **14.12.2011**
(21) Anmeldenummer: 06101609.3
(22) Anmeldetag: 13.02.2006
(51) Int. Cl.: B66B 23/22, G02B 7/02

(54) **Beförderungsanlage mit einer Linsenanordnung zur Integration in eine Wandung, Verfahren zur Montage der Beförderungsanlage**
Conveyor comprising a lens arrangement for being integrated into a wall, method for mounting said conveyor
Système de transport avec un arrangement avec lentille à intégrer dans une paroi, méthode de montage du système de transport

(30) Priorität: 17.02.2005 EP 05101181
(43) Veröffentlichungstag der Anmeldung: 23.08.2006
(73) Patentinhaber: Inventio AG, 6052 Hergiswil (CH)
(72) Erfinder: Kleewein, Gerhard, 3021, Pressbaum (AT); Pollheimer, Thomas, 1160, Wien (AT); Blondiau, Dirk, 1190, Wien (AT); Stoiber, Gerhard, 2225, Gösting (AT)

(56) Entgegenhaltungen:
- GB-A- 2 025 596
- US-A- 5 848 839
- US-A1- 2004 061 957
- PATENT ABSTRACTS OF JAPAN Bd. 016, Nr. 069 (M-1212), 20. Februar 1992 (1992-02-20) & JP 03 259895 A (TOSHIBA CORP), 19. November 1991 (1991-11-19)

## Beschreibung

Die Erfindung betrifft eine Beförderungsanlage gemäss Anspruch 1, und ein Verfahren zur Montage der Beförderungsanlage gemäss Anspruch 11.

Mit dem Begriff wandungsintegrierbar bzw. wandungsintegriert soll ausgedrückt werden, dass die Linsenanordnung sich grösstenteils, aber nicht unbedingt vollständig, innerhalb der Begrenzungsflächen einer Wandung befindet.

Wandungsintegrierte Einrichtungen dieser Art werden beispielsweise zur Überwachung und/oder Beleuchtung von Bereichen eines Raumes benutzt.

Eine Beförderungsanlage gemäß dem Oberbegriff des Anspruchs 1 ist z.B. in JP-A-03259895 gezeigt.

Die US-6,785,053 beschreibt eine derartige Einrichtung. Ein Anschlussgehäuse, das ein, eine Strahlung emittierendes, Element enthält, ist im Wesentlichen auf der einen Seite einer Wandung angeordnet. Eine Linsenanordnung weist einen für die Strahlung durchlässigen Linsenkopf auf, welcher mindestens zum Teil im Bereich der anderen Seite der Wandung angeordnet ist und die Strahlung auf diese andere Seite der Wandung lenkt. Das Anschlussgehäuse besitzt einen gehäuseseitigen Ansatz mit einem gehäuseseitigen bzw. gehäusefesten Verbindungsglied in Form eines Innengewindes.

Die Linsenanordnung besitzt einen an den Linsenkopf anschliessenden linsenseitigen Ansatz mit einem linsenfesten Verbindungsglied in Form eines zum genannten Innengewinde komplementären Aussengewindes. Die Wandung weist einen Wandungsdurchbruch auf, durch den der linsenseitige Ansatz ragt. Die beiden Verbindungsglieder sind miteinander im Eingriff, so dass der Anschlusskasten und die Linsenanordnung aneinander und im Wandungsdurchbruch fixiert sind.

Einrichtungen dieser Art können beispielsweise zur Beleuchtung des unteren Bereiches von Beförderungsanlagen, wie Fahrtreppen oder Fahrsteigen oder Aufzügen, eingesetzt werden. Hierbei wird eine Vielzahl von Linsenanordnungen in Durchbrüche einer Wandung eingesetzt, die seitlich eines Fahrtreppen-Stufenbandes bzw. Fahrsteig-Palettenbandes angeordnet ist. Es kann sich bei der Wandung um ein Sockelblech oder um eine Balustradenwand handeln. Die Linsenköpfe sind so geformt, dass sie nur von der Fahrtreppe bzw. dem Fahrsteig zugewandten Seite der Stufenseite bzw. der Palettenseite der Wandung in den Wandungsdurchbruch einbringbar sind. Auf der der Fahrtreppe bzw. dem Fahrsteig abgewandten Seite der Wandung befindet sich der Anschlusskasten.

Bei der Verwendung der durch die US-6,785,053 bekannt gewordenen Einrichtung im Bereich einer Beförderungsanlage treten verschiedene Nachteile auf.

Insbesondere kann die Einrichtung nicht in einer vorgegebenen Dreh- bzw. Winkellage mit Bezug zu einer senkrecht auf der Wandung stehenden Achse im Wandungsdurchbruch montiert werden. Dies wäre aber erwünscht, um die Strahlung in einen bestimmten Bereich zu lenken.

Nachteile dieser und ähnlicher bekannter Einrichtungen, die zur Beleuchtung von Fahrtreppen und Fahrsteigen vorgesehen sind, sind auch darin zu sehen, dass sie aus zahlreichen konstruktiven Bestandteilen hergestellt sind, so dass ihr Aufbau und ihre Montage verhältnismässig kompliziert und dadurch zeitintensiv sind, und dass viele Montageschritte in situ stattfinden müssen.

Die Aufgabe der Erfindung wird darin gesehen, zur Vermeidung der Nachteile des Standes der Technik :
- eine Beförderungsanlage mit einer verbesserten wandungsintegrierbaren Linsenanordnung der eingangs genannten Art,
- ein Verfahren zur Montage der neuen Beförderungsanlage vorzuschlagen.

Die Lösung dieser Aufgabe erfolgt erfindungsgemäss
- für die Beförderungsanlage durch die Merkmale des kennzeichnenden Teils des Anspruchs 1, und,
- für die Montage durch die Merkmale des Anspruchs 11.

Bevorzugte Weiterbildungen der neuen Beförderungsanlage sind durch die abhängigen Ansprüche definiert.

Bei der Erfindung sind der Wandungsdurchbruch einerseits und der Gehäuseansatz bzw. der Linsenansatz anderseits komplementär aber nicht zentralsymmetrisch geformt, und zwar derart, dass das Linsenelement in einer vorgegebenen festen Drehlage im Wandungsdurchbruch angeordnet und in dieser Lage gesichert ist.

Die erfindungsgemässe Einrichtung ist einfach im Aufbau und problemlos in der Montage. Ohne zusätzliche Werkzeuge und ohne besondere Fähigkeiten oder Aufmerksamkeit ist es möglich die Einrichtung in einer vorgegebenen Einbaulage bzw. Drehlage zu montieren, da sie gewissermassen selbsttätig in die vordefinierte, gewünschte Position gelangt.

Besonders geeignet ist die neue Einrichtung für Anwendungen im Zusammenhang mit der Verwendung von Strahlung zur Beleuchtung bzw. Ausleuchtung bzw. zur Überwachung von Beförderungsanlagen, dass heisst, wenn die Wandung eine Wand einer Beförderungsanlage ist, die im Bereich von Objekten bzw. Personen liegt, die sich relativ zur Wandung und damit relativ zum Linsenkopf bewegen. Durch den Einbau der Einrichtung in einer vorgegebenen bestimmten Drehlage wird vermieden, dass das Licht in eine unerwünschte Richtung fällt und einerseits zu befördernde Personen blendet, während anderseits der Fussbereich, in welchem eine Beleuchtung erwünscht wäre, unbeleuchtet bleibt.

Sehr günstig ist es, dass dank der vorgegebenen Lage der Einrichtung Reflektoren oder andere strahlbeeinflussende Elemente in die Linsenanordnung eingebaut werden können, welche zur Lenkung und/oder Beeinflussung der Strahlung dienen, und mit welchen die Strahlung sehr präzis formbar und / oder lenkbar ist.

Es hat sich als vorteilhaft erwiesen, eine Linsenanordnung zu benutzen, deren Linsenkopf so geformt ist, dass er die Fläche der Wandung bündig fortsetzt. Es ist aber auch eine konkave oder konvexe Ausgestaltung der Linsenköpfe durchführbar. Bei einer ebenen Wandung ist ein solcher Linsenkopf ebenfalls eben und mit der Wandfläche fluchtend angeordnet. Dies erleichtert die Reinigung der Wandung und des sichtbaren Teils des Linsenkopfes und verhindert unwillkürliche Beschädigungen, die durch relativ zur Wandung bewegte Objekte hervorgerufen werden könnten. Ausserdem werden Vandalenakte weniger provoziert und sind schwieriger durchzuführen. Dennoch sind Kugelkopf- oder Linsenkopf- oder nach innen gekrümmte Ausführungen des Linsenkopfes machbar.

Bei einem bevorzugten Ausführungsbeispiel weist der Wandungsdurchbruch eine Wand-Kontaktfläche auf, und der durch die Wandung ragende linsen- oder gehäuseseitige Ansatz weist eine Ansatz-Kontaktfläche auf. Die zur gegenseitigen Berührung vorgesehenen Kontaktflächen sind rotationsunsymmetrisch bezüglich einer senkrecht zur Wandung stehenden Achse ausgeformt. Dadurch gelangt, bei korrekter, exakter Position sowie Ausführung des Wandungsdurchbruches, die Linsenanordnung gewissermassen von selbst in die gewünschte vorgegebene Lage. Die beiden Kontaktflächen liegen im montierten Zustand mindestens teilweise aneinander an und sind vorzugsweise aufeinander zu gespannt, so dass die Linsenanordnung und das Anschlussgehäuse einwandfrei aneinander und an der Wandung fixiert sind.

Für die Erzeugung des Wandungsdurchbruches und des ihn berührenden Ansatzes ist es besonders vorteilhaft, wenn der Wandungsdurchbruch und/oder der ihn berührende Ansatz durch mindestens zwei sich teilweise überlappende zylindrische Flächen begrenzt wird bzw. sind, da dadurch mit herkömmlichen Fertigungsmethoden und mit kreisförmigen Relativbewegungen zwischen Werkstück und Werkzeug gearbeitet werden kann.

Bei einem bevorzugten Ausführungsbeispiel ist der Wandungsdurchbruch im Wesentlichen eine zylindrische Bohrung, die in mindestens einem Sektor mindestens über einen Teil ihrer Bohrungslänge eine zulaufende Wand-Kontaktfläche aufweist. Der den Wanddurchbruch berührende Ansatz weist eine zylindrische Aussenwand auf, die eine zur Wandungs-Kontaktfläche komplementäre und an der letzteren anliegende Ansatz-Kontaktfläche besitzt.

Bei einer besonders vorteilhaften Ausführung der neuen Einrichtung ist der die Begrenzungsfläche berührende Ansatz der linsenseitige Ansatz, und das linsenseitige Verbindungsglied ist ein Gewinde, vorzugsweise ein Aussengewinde oder Innengewinde.

In einer häufigen Anwendung der Erfindung ist das Strahlung emittierende Element, ein Licht emittierendes Element und der Linsenkopf ist mindestens teilweise oder völlig (ganz) aus einem lichtdurchlässigen Material hergestellt.

Weitere Einzelheiten und Vorteile der Erfindung werden im Folgenden an Hand von Ausführungsbeispielen und mit Bezug auf die Zeichnung erläutert. Es zeigen:
- Fig. 1A: eine Fahrtreppe mit einer Einrichtung nach der Erfindung, von der Seite, teilweise geschnitten;
- Fig. 1B: einen in Fig. 1A mit A bezeichneten Ausschnitt aus Fig. 1A;
- Fig. 2A: eine Wandung mit einem Wandungsdurchbruch, in Richtung der Längsachse des Wandungsdurchbruches gesehen;
- Fig. 2B: eine Wandung mit einem Wandungsdurchbruch, in einem die Längsachse des Wandungsdurchbruches enthaltenden Schnitt;
- Fig. 2C: eine Wandung mit einem anders geformten Wandungsdurchbruch, in gleicher Darstellung wie Fig. 2B;
- Fig. 2D: eine Wandung mit einem Wandungsdurchbruch nach Fig. 2B und mit einer schematisch angedeuteten Darstellung der Herstellung des Wandungsdurchbruches, in gleicher Darstellung wie Fig. 2B und 2C;
- Fig. 3A: eine Linsenanordnung, in Draufsicht;
- Fig. 3B: die in Fig. 3A dargestellte Linsenanordnung, von der Seite;
- Fig. 3C: die in Fig. 3A dargestellte Linsenanordnung, im Grundriss;
- Fig. 3D: einen Schnitt längs der Linie B-B der Fig. 3A;
- Fig. 4: eine Einrichtung nach der Erfindung, mit einer Linsenanordnung und einem Anschlusskasten in montiertem Zustand in einer entsprechenden Wandung;
- Fig. 5A: eine Einrichtung nach der Erfindung, mit zusätzlichen Befestigungsmitteln; in Draufsicht, und
- Fig. 5B: die in Fig. 5A dargestellte Einrichtung, von der Seite.

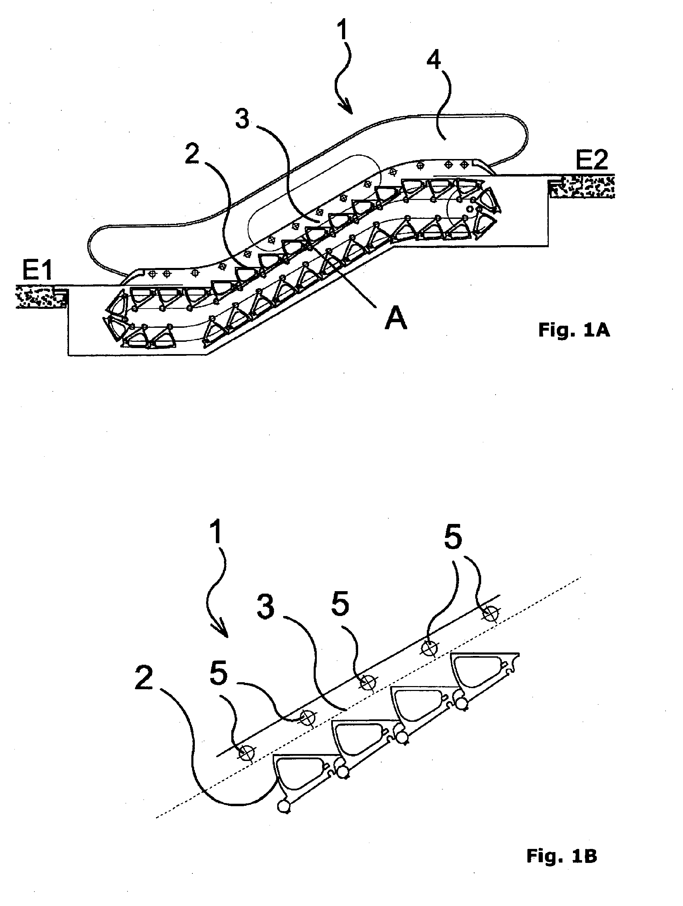

Fig. 1A zeigt eine Fahrtreppe, die ein unteres Niveau E1 mit einem oberen Niveau E2 verbindet, und die mit einer Einrichtung 1 nach der Erfindung ausgerüstet ist. Die Fahrtreppe weist ein Stufenband 2 mit einer Vielzahl von miteinander verbundenen Stufen auf. Auf jeder Seite des bewegbaren Stufenbandes 2 ist ein ortsfestes Sockelblech 3 angeordnet. Die Fahrtreppe 1 weist als seitliche Begrenzungen im unteren Teil die Sockelbleche 3 und im oberen Teil ortsfeste Balustraden 4 auf, auf welchen zuoberst im Allgemeinen ein mit dem Stufenband 2 bewegbarer Handlauf angeordnet ist.

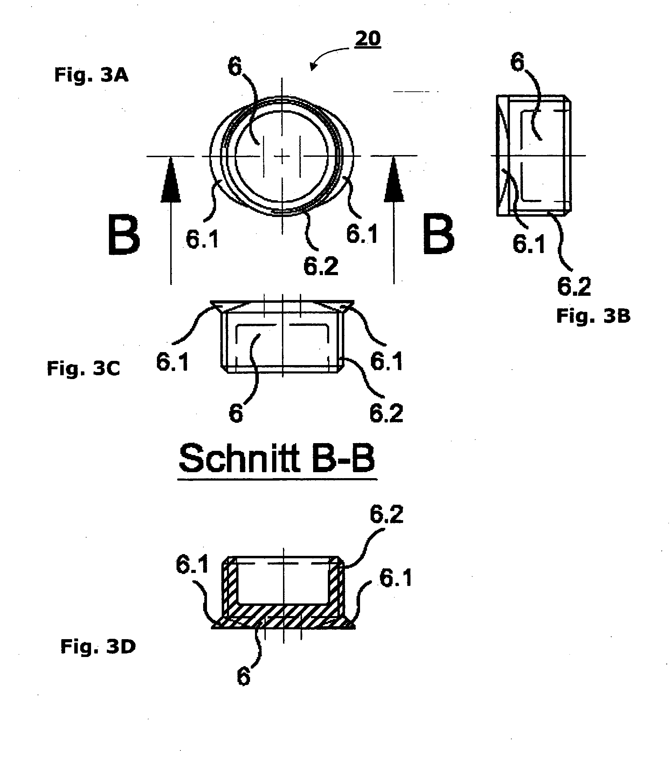

Die Sockelbleche 3 sind durch niedrige Wandungen gebildet, von denen jede mehrere in gegenseitigen Abständen angeordnete Wandungsdurchbrüche 5 aufweist, die dazu bestimmt sind, je eine Linsenanordnung 6 nach der Erfindung, wie sie beispielsweise in den Fig. 3A bis 3D dargestellt ist, aufzunehmen. Die Wandungsdurchbrüche 5 müssen immer oberhalb der die Kanten der Stufen verbindenden, in Fig. 1B gestrichelt dargestellten Linie angeordnet sein.

Statt an einer Fahrtreppe mit einem Stufenband 2 kann die Einrichtung nach der Erfindung auch an einem Fahrsteig mit einem Palettenband oder Fördergurt zum Einsatz kommen.

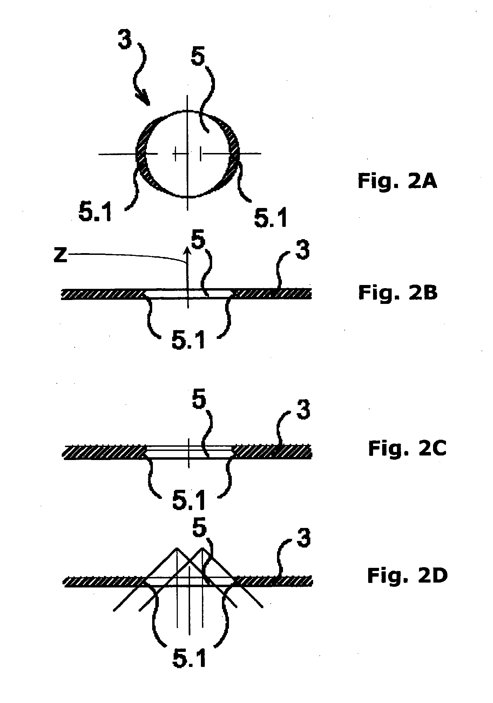

Fig. 2A zeigt ein Sockelblech 3 bzw. eine Wandung 3 mit einem der Wandungsdurchbrüche 5. Der Wandungsdurchbruch 5 ist nicht ein zylindrisches Bohrloch, kann aber ausgehend von einem solchen hergestellt werden. Während ein übliches Bohrloch zylindrisch ist, weist der Wandungsdurchbruch 5 eine nicht-zylindrische Form auf, die dadurch zu Stande kommt, dass das Loch an mindestens zwei entgegengesetzten Seiten, in den Fig. 2A bis 2D links und rechts, WandKontaktflächen in der Form von Kegelflächen 5.1 aufweist.

Fig. 2B zeigt einen Wandungsdurchbruch 5, bei welchem sich die Wand-Kontaktfläche 5.1 über die ganze axiale Länge bzw. über die ganze Wandstärke des Sockelbleches 3 erstrecken. Fig. 2C zeigt einen Wandungsdurchbruch 5, bei welchem sich die Wand-Kontaktfläche 5.1 nur über einen Teil der axialen Länge bzw. der Wandstärke des Sockelbleches 3 erstrecken. Fig. 2D zeigt schematisch die Herstellung der Wandkontaktflächen 5.1 mit Hilfe eines konischen Bohrers oder Fräsers oder Stanzwerkzeuges, der in einem ersten und nachfolgend in einem zweiten Bearbeitungsschritt eingesetzt wird, wobei die Bohrer-Längsachse gegenüber der Längsachse des ursprünglichen Bohrloches im ersten Bearbeitungsschritt nach einer Richtung verschoben ist und im zweiten Bearbeitungsschritt nach der gegenüberliegenden Richtung verschoben ist.

Die Fig. 3A bis 3D zeigen eine Linsenanordnung 20 nach der Erfindung, die dazu bestimmt und ausgebildet ist, in einem Wandungsdurchbruch 5 aufgenommen zu werden.

Fig. 3A zeigt die Linsenanordnung 20 mit einem Linsenkopf 6, einem bzw. zweien linsenseitigen Ansatz bzw. Ansätzen 6.1 und einem linsenseitigen, im vorliegenden Beispiel linsenfesten, Verbindungsglied 6.2.

Beim gezeigten Ausführungsbeispiel ist der Linsenkopf durch eine ebene Begrenzungsfläche begrenzt, die im montierten Zustand fluchtend mit der dem Stufenband 2 zugewandten Fläche der Wandung 3 des Sockelbleches angeordnet ist. Die Linsenanordnung 20 muss nicht eine solche flächenintegrierbare Begrenzungsfläche aufweisen, aber eine derart geformte Linsenanordnung erweist sich als besonders vorteilhaft, da die Strahlungsausbeute befriedigend und der Linsenkopf hierbei weitgehend gegen Beschädigungen geschützt ist. Ein vertieft in der Wandung angeordneter Linsenkopf würde die Strahlung beeinträchtigen, der Verschmutzung des Sockelbleches bzw. des Linsenkopfes Vorschub leisten und die Reinigung erschweren, ein vorstehender Linsenkopf würde unter Umständen zwar die Strahlungsausbeute verbessern, er wäre aber sehr beschädigungsanfällig. Eine konkave oder konvexe Ausgestaltung ist aber durchführbar sowie eine farbliche und /oder facettenreiche bzw. facettenärmere Ausführung.

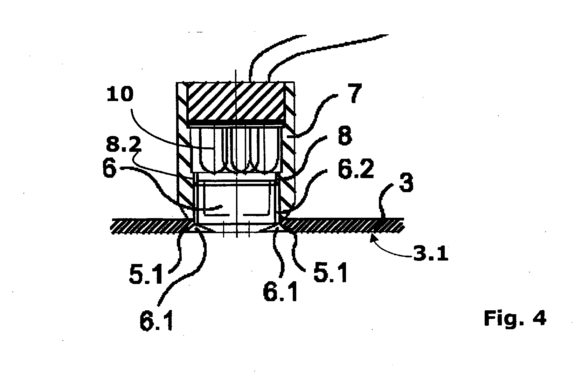

Mindestens die dem Stufenband 2 zugewandte Fläche des Linsenkopfes 6 ist für Strahlung durchlässig, die gemäss Fig. 4 von einem strahlungsemittierenden Element 10, zum Beispiel einer Lampe, emittiert wird, die in einem Anschlusskasten 7 angeordnet ist. Der Anschlusskasten 7 wird weiter unten mit Bezug auf Fig. 4 genauer beschrieben.

Der linsenseitige Ansatz 6.2 ist dazu bestimmt, im montierten Zustand durch den Wandungsdurchbruch 5 zu ragen.

Alternativ kann auch der linsenseitige Ansatzes 6.1 oder ein kastenseitiger Ansatz 8 des Anschlusskastens 7 nur teilweise durch den Wandungsdurchbruch 5 ragen, oder es kann nur der kastenseitige Ansatz 8 des Anschlusskasten 7 durch den Wandungsdurchbruch 5 ragen.

Das linsenseitige bzw. linsenfeste Verbindungsglied 6.2 ist bei vorliegenden Ausführungsbeispiel durch ein Aussengewinde gebildet und dazu bestimmt, im montierten Zustand mit einem komplementären gehäuseseitigen Verbindungsglied in Form eines Innengewindes, das am anschlussseitigen Ansatz des Anschlusskastens 7 gebildet ist, in Eingriff zu stehen.

Die Linsenanordnung 20 bzw. der linsenseitige Ansatz 6.1 ist komplementär zum Wandungsdurchbruch 5 ausgebildet und weist somit zwei Ansatz-Kontaktflächen in Form von Kegelflächen auf, die einander gegenüberliegen.

Die Linsenanordnung 20 lässt sich somit wie erwünscht nur in vorbestimmter Drehlage im Wandungsdurchbruch anordnen und verhält sich zudem bei der Montage gewissermassen selbstzentrierend.

Fig. 4 zeigt eine Einrichtung nach der Erfindung, mit einer Wandung 3, deren Fläche 3.1 dem Stufenband 2 zugewandt ist, und die den Wandungsdurchbruch 5 mit den konischen Wandungs-Kontaktflächen 5.1 aufweist. Im Weiteren ist die Linsenanordnung 20 dargestellt, mit dem Linsenkopf 6, dem linsenseitigen Ansatz 6.1 mit den Ansatz-Kontaktflächen und dem linsenseitigen bzw. linsenfesten Verbindungsglied bzw. Aussengewinde 6.2. Ebenfalls gezeigt ist der Anschlusskasten 7 mit dem kastenseitigen Ansatz 8, der mit dem kastenseitigen Verbindungsglied 8.2 bzw. Innengewinde 8.2 versehen ist.

Die Montage erfolgt in einfacher Weise, indem das Linsenelement 20 von der dem Stufenband 2 zugewandten Seite der Wandung 3 in den Wandungsdurchbruch 5 geschoben wird, derart, dass die Wandungs-Kontaktflächen und die Ansatz-Kontaktflächen gegenseitig zur Anlage kommen. Anschliessend wird der Anschlusskasten 7 festgeschraubt, wobei sich nur der Anschlusskasten 7, nicht aber die Linsenanordnung 20, dreht. Diese Art der Montage ist schneller und einfacher als die Montage herkömmlicher Einrichtungen, bei welchen mehrere Muttern bzw., Schweissbolzen verwendet werden, und ausserdem wird eine Einsparung erzielt, da keine weiteren Schrauben, Muttern, Unterlagsscheiben, Schweissbolzen benötigt werden.

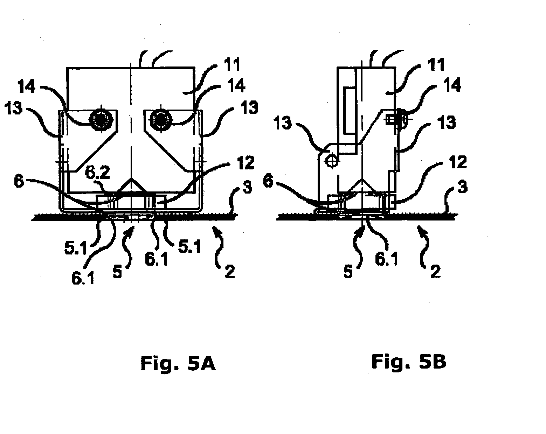

Fig. 5A und 5B zeigen eine Variante der Erfindung, wobei der Anschlusskasten 11 ein Befestigungsmittel 13, nämlich einen Anschlusskasten-Befestigungsbügel bzw. Anschlusskasten-Befestigungshalter aufweist. Mit einem solchen Befestigungsmittel 13 erzielt man eine höhere Tragkraft und eine verbesserte mechanische Stabilität. Dank der Verwendung dieses Befestigungsmittels 13 kann somit ein grösserer bzw. schwerer Anschlusskasten 11 verwendet werden mit einer erhöhten Elektronik-Einbaukapazität oder mit grösseren bzw. stärkeren Sendern und Empfängern, oder grösseren Leuchtmitteln. Das Befestigungsmittel 13 wird mit Hilfe einer Mutter bzw. Kunststoffmutter 12, die das kastenseitige Verbindungsglied bildet, mit dem linsenseitigen Verbindungsglied bzw. Aussengewinde 6.2 verschraubt. Das Befestigungsmittel 13 weist ein Rundloch auf, welches erlaubt, dass es auf das Aussengewinde 6.2 geschoben und mit der genannten Mutter 12 drehfest fixiert wird. Mit Hilfe von Schrauben 14 wird der eigentliche Anschlusskasten 11 mit dem Befestigungsmittel 13 zusammen montiert.

Im Anschlusskasten ist das strahlungsemittierende Element 10 angeordnet, für welches verschiedene Ausführungen in Frage kommen wobei die Einrichtung nach der Erfindung je nach dem gewählten strahlungsemittierenden Element 10 für verschiedene Zwecke eingesetzt werden kann. Möglich sind insbesondere Beleuchtungskörper bzw. Beleuchtungsmitteln, Lichtschranken, LEDs, Lichtvorhang, Infrarot-Lichtschranken, Sender und Empfänger, Ultraschall oder Radar.

## Patentansprüche

1. Beförderungsanlage mit wandungsintegrierbarer Linsenanordnung (20), welche zur Befestigung an einer Wandung (3) und zur Montage eines Anschlussgehäuses (7, 11) bestimmt ist, welche Linsenanordnung (20) einen strahlungsdurchlässigen Linsenkopf (6) aufweist, an welchen sich ein linsenseitiger Ansatz (6.1) mit einem linsenseitigen Verbindungsglied (6.2) anschliesst, wobei der linsenseitige Ansatz (6.1) dazu bestimmt ist, in einen Wandungsdurchbruch (5) zu ragen und das linsenseitige verbindungsglied (6.2) dazu bestimmt ist, mit einem gehäuseseitigen Verbindungsglied (8.2) an einem gehäuseseitigen Ansatz des Anschlussgehäuses (8) verbunden zu werden, **dadurch gekennzeichnet, dass** der Wandungsdurchbruch (5) an mindestens zwei entgegengesetzten Seiten Wandkontaktflächen in der Form von Kegelflächen (5.1) aufweist und der linsenseitige Ansatz (6.1) der Linsenanordnung (20) komplementär zum Wandungsdurchbruch (5) mit mindestens zwei Ansatz-Kontaktflächen in Form von Kegelflächen ausgebildet ist, so dass der linsenseitige Ansatz (6.1) in einer vorgegebenen festen Lage bzw. Drehlage in den komplementär zu ihm ausgebildeten Wandungsdurchbruch (5) einbringbar ist und in dem Wandungsdurchbruch (5) gegen Verdrehung sicherbar bzw. gesichert ist.

2. Beförderungsanlage nach Anspruch 1 mit wandungsintegrierter Einrichtung (1) mit einem Anschlussgehäuse (7), einer Linsenanordnung (20) und einer Wandung (3), wobei das Anschlussgehäuse (7) ein Strahlung abgebendes oder aufnehmendes Element (10) aufweist, auf einer ersten Seite der Wandung (3) angeordnet ist und einen gehäuseseitigen Ansatz (8) mit einem gehäuseseitigen Verbindungsglied (8.2) aufweist, wobei die Linsenanordnung (20) einen Linsenkopf (6) aufweist, der für die Strahlung in Richtung der zweiten Seite der Wandung (3) durchlässig ist, an welchen sich ein linsenseitiger Ansatz (6.1) mit einem linsenseitigen Verbindungsglied (6.2) anschliesst, wobei die Wandung (3) einen Wardungsdurchbruch (5) aufweist, durch welchen mindestens einer der Ansätze (6.1, 8) mindestens teilweise ragt, und wobei das gehäuseseitige Verbindungsglied (8.2) und das linsenseitige Verbindungsglied (6.2) sich miteinander im Eingriff befinden, wobei der Wandungsdurchbruch (5) und der durch ihn ragende Ansatz (6.1, 8) komplementär geformt sind, und dass das Linsenelement (6) in einer vorgegebenen festen Lage bzw. Drehlage angeordnet und in dieser gegen Verdrehung gesichert ist.

3. Beförderungsanlage nach Anspruch 2 mit wandungsintegrierter Einrichtung (1) , **dadurch gekennzeichnet, dass** der Linsenkopf (6) die der zweiten Seite der Wandung (3) zugewandte Fläche (3.1) der Wandung (3) bündig fortsetzt.

4. Beförderungsanlage nach Anspruch 2 mit wandungsintegrierter Einrichtung (1) , **dadurch gekennzeichnet, dass** der Linsenkopf (6) die der zweiten Seite der Wandung (3) zugewandte Fläche (3.1) der Wandung (3) konkav und /oder konvex fortsetzt.

5. Beförderungsanlage nach einem der Ansprüche 2 bis 4 mit wandungsintegrierter Einrichtung (1), **dadurch gekennzeichnet, dass** die Linsenanordnung (20) eine Reflektoranordnung und/oder ein strahlformendes Element enthält,
um die Strahlung zu lenken und/oder zu beeinflussen und /oder zu bündeln.

6. Beförderungsanlage nach einem der Ansprüche 2 bis 5 mit wandungsintegrierter Einrichtung (1), **dadurch gekennzeichnet, dass** der Wandungsdurchbruch (5) und/oder der ihn berührende Ansatz (6.1) durch mindestens zwei sich teilweise überlappende zylindrische Flächen begrenzt sind.

7. Beförderungsanlage nach einem der Ansprüche 2 bis 6 mit wandungsintegrierter Einrichtung (1), **dadurch gekennzeichnet, dass** der Wandungsdurchbruch (5) eine Wand-Kontaktfläche (5.1) und der durch ihn ragende Ansatz eine Ansatz-Kontaktfläche (6.1) aufweisen, die mindestens teilweise aneinander anliegen und rotationsunsymmetrisch bezüglich einer senkrecht zur Wandung (3) stehenden. Achse (Z) sind.

8. Beförderungsanlag nach Anspruch 2 mit wandungsintegrierter Einrichtung (1) , **dadurch gekennzeichnet, dass** der gehäuseseitige Ansatz des Anschlussgehäuses (7, 11) ein vorzugsweise bügelartiges Befestigungsmittel (13) aufweist, über das das Anschlussgehäuse (7, 11) mit Hilfe des gehäuseseitigen Verbindungsgliedes (12) am linsenseitigen Ansatz (6.1) befestigt ist.

9. Beförderungsanlage nach einem der Ansprüche 2 bis mit wandungsintegrierter Einrichtung (1), **dadurch gekennzeichnet, dass** der die Begrenzungsfläche (5.1) des Wandungsdurchbruchs (5) berührende Ansatz (6.1) der linsenseitige Ansatz ist, und dass das linsenseitige Verbindungsglied (6.2) ein Gewinde, vorzugsweise ein Aussengewinde, ist.

10. Beförderungsanlage nach Anspruch 2 mit wandungsintegrierter Einrichtung (1), **dadurch gekennzeichnet, dass** das Strahlung emittierende Element (10) ein Licht emittierendes Element und der Linsenkopf (6) mindestens teilweise oder völlig aus einem lichtdurchlässigen Material hergestellt ist.

11. Verfahren zur Montage einer Beförderungsanlage nach einem der Ansprüche 2 bis 10, **dadurch gekennzeichnet, dass** die Linseneinrichtung (20) von der einem Stufenoder Palettenband (2) abgewandten Seite der Wandung (3) in den Wandungsdurchbruch (5) geschoben wird, derart, dass die Kontaktflächen der Wandung (3) und der Linsenanordnung (20) drehfest aneinander anliegen, und dass der Anschlusskasten (7, 11) unmittelbar oder mittelbar an der Linsenanordnung (20) fixiert wird.

12. Beförderungsanlage nach einem der Ansprüche 2 bis 10, die eine Fahrtreppe oder Fahrsteig oder Aufzug ist.

13. Beförderungsanlage nach Anspruch 12, **dadurch gekennzeichnet, dass** die Wandung (3) ein seitliches bzw. senkrechtes Sockelblech oder eine seitlich bzw. gerade oder schräg Balustrade ist.

14. Beförderungsanlage nach Anspruch 12 oder 13, **dadurch gekennzeichnet, dass** die Einrichtung (1) die Fahrtreppe oder den Fahrsteig beleuchtet bzw. ausleuchtet bzw. überwacht.

## Claims

1. Transportation installation with wall-integrable lens arrangement (20) intended for fastening to a wall (3) and for mounting a connection housing (7, 11), which lens arrangement (20) comprises a radiation-permeable lens head (6), with which a lens-side attachment (6.1) with a lens-side connecting member (6.2) is connected, wherein the lens-side attachment (6.1) is intended to project into a wall breakthrough (5) and the lens-side connecting member (6.2) is intended to be connected by a housing-side connecting member (8.2) to a housing-side attachment of the connection housing (8), **characterised in that** the wall breakthrough (5) has, at at least two opposite sides, wall contact surfaces in the form of cone surfaces (5.1) and the lens-side attachment (6.1) of the lens arrangement (20) is formed in complementary manner to the wall breakthrough (5) with at least two attachment contact surfaces in the form of cone surfaces, so that the lens-side attachment (6.1) can be inserted into the wall breakthrough (5), which is formed to be complementary therewith, in a predetermined fixed position or rotational position and can be or is secured in the wall breakthrough (5) against turning.

2. Transportation installation according to claim 1 with wall-integrated device (1) with a connection housing (8), a lens arrangement (20) and a wall (3), wherein the connection housing (8) comprises a radiation-emitting or radiation-receiving element (10) and is arranged on a first side of the wall (3) and has a housing-side attachment (8) with a housing-side connecting member (8.2), wherein the lens arrangement (20) comprises a lens head (6) permeable by the radiation in the direction of the second side of the wall (3), with which a lens-side attachment (6.1) with a lens-side connecting member (6.2) is connected, wherein the wall (3) has a wall breakthrough (5) through which at least one of the attachments (6.1, 8) at least partially projects, and wherein the housing-side connecting member (8.2) and the lens-side connecting member (6.2) are in mutual engagement, wherein the wall breakthrough (5) and the attachment (6.1, 8) projecting therethrough are formed to be complementary and the lens element (6) is arranged in a predetermined fixed position or rotational position and is secured in this position against turning.

3. Transportation installation according to claim 2 with wall-integrated device (1), **characterised in that** the lens head (6) flushly continues the surface (3.1) of the wall (3) that faces the second side of the wall (3).

4. Transportation installation according to claim 2 with wall-integrated device (1), **characterised in that** the lens head (6) continues in concave and/or convex manner the surface (3.1) of the wall (3) that faces the second side of the wall (3).

5. Transportation installation according to any one of claims 2 to 4, with wall-integrated device (1), **characterised in that** the lens arrangement (20) contains a reflector arrangement and/or a beam-forming element to guide and/or influence and/or bundle the radiation.

6. Transportation installation according to any one of claims 2 to 5 with wall-integrated device (1), **characterised in that** the wall breakthrough (5) and/or the attachment (6.1) contacting it are bounded by at least two partly overlapping cylindrical surfaces.

7. Transportation installation according to any one of claims 2 to 6 with wall-integrated device (1), **characterised in that** the wall breakthrough (5) has a wall contact surface (5.1) and the attachment projecting therethrough has an attachment contact surface (6.1), which bear at least partly against each other and are rotationally asymmetrical with reference to an axis (Z) perpendicular to the wall (3).

8. Transportation installation according to claim 2 with wall-integrated device (1), **characterised in that** the housing-side attachment of the connection housing (7, 11) has a preferably bracket-like fastening means (13) via which the connection housing (7, 11) is fastened with the aid of the housing-side connection member (12) to the lens-side attachment (6.1).

9. Transportation installation according to any one of claims 2 to 8 with wall-integrated device (1), **characterised in that** the attachment (6.1) contacting the boundary surface (5.1) of the wall breakthrough (5) is the lens-side attachment and that the lens-side connection member (6.2) is a thread, preferably an external thread.

10. Transportation installation according to claim 2 with wall-integrated device (1), **characterised in that** the radiation-emitting element (10) is a light-emitting element and the lens head (6) is made at least partly, or fully, of a material permeable to light.

11. Method of installing a transportation installation according to any one of claims 2 to 10, **characterised in that** the lens device (20) is pushed from the side of the wall (3) that faces away from the step-belt or pallet-belt (2) side into the wall breakthrough (5) in such manner that the contact surfaces of the wall (3) and the lens arrangement (20) bear against each other in non-rotatable manner and that the connection box (7, 11) is fixed directly or indirectly to the lens arrangement (20).

12. Transportation installation according to any one of claims 2 to 10, which is an escalator or moving walk or elevator.

13. Transportation installation according to claim 12, **characterised in that** the wall (3) is a lateral or vertical skirt panel or a lateral or straight or sloping balustrade.

14. Transportation installation according to claim 12 or 13, **characterised in that** the device (1) lights or illuminates or monitors the escalator or moving walk.

## Revendications

1. Installation de transport avec un dispositif à lentille (20) apte à être intégré dans une paroi, qui est destiné à la fixation à une paroi (3) et au montage d'une boîte de raccordement (7, 11), lequel dispositif à lentille (20) comporte une tête de lentille (6) qui laisse passer un rayonnement et à laquelle fait suite une saillie côté lentille (6.1) avec un élément de liaison côté lentille (6.2), étant précisé que la saillie côté lentille (6.1) est destinée à dépasser dans une ouverture de paroi (5) tandis que l'élément de liaison côté lentille (6.2) est destiné à être relié à un élément de liaison côté boîte (8.2) au niveau d'une saillie, côté boîte, de la boîte de raccordement (8), **caractérisée en ce que** l'ouverture de paroi (5) présente sur au moins deux côtés opposés des surfaces de contact de paroi sous la forme de surfaces coniques (5.1), et la saillie côté lentille (6.1) du dispositif à lentille (20) est complémentaire par rapport à l'ouverture de paroi (5), avec au moins deux surfaces de contact de saillie en forme de surfaces coniques, de sorte que la saillie côté lentille (6.1) est apte à être introduite dans l'ouverture de paroi (5) complémentaire dans une position fixe ou de rotation prédéfinie, et est apte à être bloquée ou est bloquée à l'encontre d'une rotation dans ladite ouverture de paroi (5).

2. Installation de transport selon la revendication 1 avec un dispositif (1) intégré dans une paroi, avec une boîte de raccordement (7), un dispositif à lentille (20) et une paroi (3), étant précisé que la boîte de raccordement (7) comporte un élément (10) qui émet ou reçoit un rayonnement, est disposée sur un premier côté de la paroi (3) et comporte une saillie côté boîte (8) avec un élément de liaison côté boîte (8.2), que le dispositif à lentille (20) comporte une tête de lentille (6) qui laisse passer le rayonnement en direction du second côté de la paroi (3) et à laquelle fait suite une saillie côté lentille (6.1) avec un élément de liaison côté lentille (6.2), que la paroi (3) présente une ouverture de paroi (5) d'où dépasse au moins en partie l'une au moins des saillies (6.1, 8), que l'élément de liaison côté boîte (8.2) et l'élément de liaison côté lentille (6.2) s'interpénètrent, que l'ouverture de paroi (5) et la saillie (6.1, 8) qui dépasse de celle-ci ont des formes complémentaires, et que l'élément de lentille (6) est disposé dans une position fixe ou de rotation prédéfinie et est bloqué dans cette position à l'encontre d'une rotation.

3. Installation de transport selon la revendication 2 avec un dispositif (1) intégré dans une paroi, **caractérisée en ce que** la tête de lentille (6) prolonge la surface (3.1) de la paroi (3) tournée vers le second côté de ladite paroi (3) dans le même plan.

4. Installation de transport selon la revendication 2 avec un dispositif (1) intégré dans une paroi, **caractérisée en ce que** la tête de lentille (6) prolonge la surface (3.1) de la paroi (3) tournée vers le second côté de ladite paroi (3) avec une forme concave et/ou convexe.

5. Installation de transport selon l'une des revendications 2 à 4 avec un dispositif (1) intégré dans une paroi, **caractérisée en ce que** le dispositif à lentille (20) contient un dispositif à réflecteur et/ou un élément de formation de rayon, afin de diriger et/ou d'influencer et/ou de focaliser le rayonnement.

6. Installation de transport selon l'une des revendications 2 à 5 avec un dispositif (1) intégré dans une paroi, **caractérisée en ce que** l'ouverture de paroi (5) et/ou la saillie (6.1) qui la touche sont délimitées par au moins deux surfaces cylindriques qui se recouvrent en partie.

7. Installation de transport selon l'une des revendications 2 à 6 avec un dispositif (1) intégré dans une paroi, **caractérisée en ce que** l'ouverture de paroi (5) et la saillie qui la traverse présentent respectivement une surface de contact de paroi (5.1) et une surface de contact de saillie (6.1) qui sont appliquées au moins en partie l'une contre l'autre et qui présentent une asymétrie de révolution par rapport à un axe (Z) perpendiculaire à la paroi (3).

8. Installation de transport selon la revendication 2 avec un dispositif (1) intégré dans une paroi, **caractérisée en ce que** la saillie côté boîte de la boîte de raccordement (7, 11) présente un moyen de fixation (13) de préférence en forme d'étrier par l'intermédiaire duquel la boîte de raccordement (7, 11) est fixée à la saillie côté lentille (6.1) à l'aide de l'élément de liaison côté boîte (12).

9. Installation de transport selon l'une des revendications 2 à 8 avec un dispositif (1) intégré dans une paroi, **caractérisée en ce que** la saillie (6.1) qui touche la surface limite (5.1) de l'ouverture de paroi (5) est constituée par la saillie côté lentille, et **en ce que** l'élément de liaison côté lentille (6.2) est constitué par un filetage, de préférence un filetage extérieur.

10. Installation de transport selon la revendication 2 avec un dispositif (1) intégré dans une paroi, **caractérisée en ce que** l'élément (10) émetteur de rayonnement est constitué par un élément émetteur de lumière, et la tête de lentille (6) est fabriquée au moins en partie ou en totalité à partir d'un matériau translucide.

11. Procédé pour le montage d'une installation de transport selon l'une des revendications 2 à 10, **caractérisé en ce que** le dispositif à lentille (20) est glissé dans l'ouverture de paroi (5) par le côté de la paroi (3) opposé à une bande de marches ou de palettes (2), de telle sorte que les surfaces de contact de la paroi (3) et du dispositif à lentille (20) soient appliquées l'une contre l'autre fixes en rotation, et **en ce que** le coffret de raccordement (7, 11) est fixé directement ou indirectement au dispositif à lentille (20).

12. Installation de transport selon l'une des revendications 2 à 10, qui est constituée par un escalier roulant ou un tapis roulant ou un ascenseur.

13. Installation de transport selon la revendication 12, **caractérisée en ce que** la paroi (3) est constituée par une tôle de socle latérale ou verticale, ou par une balustrade latérale ou droite, ou inclinée.

14. Installation de transport selon la revendication 12 ou 13, **caractérisée en ce que** le dispositif (1) éclaire ou illumine ou surveille l'escalier roulant ou le tapis roulant.
